# EUROPÄISCHE PATENTSCHRIFT

(11) **EP 3 322 537 B1**
(45) Veröffentlichungstag und Bekanntmachung des Hinweises auf die Patenterteilung: **02.09.2020**
(21) Anmeldenummer: 16733885.4
(22) Anmeldetag: 01.07.2016
(51) Int. Cl.: B05B 1/30, B05B 12/14

(54) **BESCHICHTUNGSMITTELVENTIL**
COATING AGENT VALVE
VANNE POUR AGENT DE REVÊTEMENT

(30) Priorität: 13.07.2015 DE 102015009046
(43) Veröffentlichungstag der Anmeldung: 23.05.2018
(73) Patentinhaber: Dürr Systems AG, 74321 Bietigheim-Bissingen (DE)
(72) Erfinder: EICHHORN, Jens, 74321 Bietigheim-Bissingen (DE); SOTZNY, Steffen, 71720 Oberstenfeld (DE)
(74) Vertreter: v. Bezold & Partner Patentanwälte - PartG mbB
(86) Internationale Anmeldenummer: PCT/EP2016/001128
(87) Internationale Veröffentlichungsnummer: WO 2017/008887

(56) Entgegenhaltungen:
- EP-A1- 3 006 114
- CH-A- 531 900
- US-A- 3 412 939
- US-B1- 6 991 180

## Beschreibung

Die Erfindung betrifft ein Beschichtungsmittelventil zur Steuerung eines Beschichtungsmittelstroms eines Beschichtungsmittels in einem Applikationsgerät, insbesondere in einem Zerstäuber (z. B. Rotationszerstäuber).

In modernen Lackieranlagen zur Lackierung von Kraftfahrzeugkarosseriebauteilen werden als Applikationsgerät üblicherweise Rotationszerstäuber eingesetzt. Derartige Rotationszerstäuber weisen zur Steuerung des Lackstroms in der Regel ein Hauptnadelventil auf, das als Ventilelement eine verschiebbare Ventilnadel enthält, die üblicherweise pneumatisch angesteuert wird.

Nachteilig an einem solchen Hauptnadelventil ist die Tatsache, dass nur ein einziger Lackstrom besteuert werden kann. Bei einem Farbwechsel muss deshalb zunächst die Farbleitung gespült und mit dem neuen Lack befüllt werden, was auch als Andrücken bezeichnet wird. Dieses Spülen und Andrücken benötigt relativ viel Zeit, in welcher der Rotationszerstäuber nicht zur Lackapplikation genutzt werden kann.

Ein weiterer Nachteil der bekannten Hauptnadelventile wird dadurch verursacht, dass die Ventilnadel beim Schließen des Hauptnadelventils in der Strömungsrichtung des Lacks in den Ventilsitz gedrückt wird, wodurch Lack nachgedrückt werden kann, d. h. es kann bei einem Schließvorgang zu einem Nachspucken oder Nachtropfen von Lack kommen, was unerwünscht ist.

Zum Stand der Technik ist auch hinzuweisen auf DE 10 2013 006 219 A1, DE 10 2007 018 064 A1, DE 10 2010 056 071 A1, DE 195 24 853 A1 und DE 3 674 205.

Zum allgemeinen technischen Hintergrund der Erfindung ist hinzuweisen auf US 3 412 939 A, EP 3 006 114 A1 und US 6 991 180 B1.

Schließlich offenbart CH 531 900 A ein Beschichtungsmittelventil gemäß dem Oberbegriff von Anspruch 1. Eine Rückführung von Beschichtungsmittel ist hierbei jedoch mit dem Beschichtungsmittelventil nicht möglich.

Der Erfindung liegt deshalb die Aufgabe zugrunde, ein entsprechend verbessertes Beschichtungsmittelventil zu schaffen.

Diese Aufgabe wird durch ein erfindungsgemäßes Beschichtungsmittelventil gemäß dem Hauptanspruch gelöst.

Das erfindungsgemäße Beschichtungsmittelventil weist zunächst in Übereinstimmung mit den bekannten Hauptnadelventilen ein verstellbares Ventilelement auf, das den Beschichtungsmittelstrom in Abhängigkeit von der Stellung des Ventilelements steuert. Im Gegensatz zu den bekannten Hauptnadelventilen ist das Ventilelement hierbei jedoch nicht oder zumindest nicht nur verschiebbar, sondern drehbar. Dies ist vorteilhaft, weil es dadurch bei einem Schließvorgang des Beschichtungsmittelventils nicht zu dem vorstehend beschriebenen störenden Nachspucken oder Nachtropfen von Beschichtungsmittel kommt. Ein weiterer Vorteil einer solchen drehbaren Anordnung besteht darin, dass das Beschichtungsmittelventil in einem kleinen Bauraum realisiert werden kann und keine lange Hauptnadel benötigt.

Gemäß der Erfindung weist das Beschichtungsmittelventil zwei Beschichtungsmitteleinlässe auf, um zwei verschiedene Beschichtungsmittel zuführen zu können. Darüber hinaus weist das Beschichtungsmittelventil einen Beschichtungsmittelauslass auf, um wahlweise das erste Beschichtungsmittel oder das zweite Beschichtungsmittel auszugeben. Das drehbare Ventilelement wählt hierbei also in Abhängigkeit von seiner Drehstellung wahlweise das erste Beschichtungsmittel oder das zweite Beschichtungsmittel aus und leitet dies zu dem gemeinsamen Beschichtungsmittelauslass. Das drehbare Ventilelement verbindet also den Beschichtungsmittelauslass in Abhängigkeit von seiner Drehstellung wahlweise mit dem ersten Beschichtungsmitteleinlass oder mit dem zweiten Beschichtungsmitteleinlass. Auf diese Weise ermöglicht das erfindungsgemäße Beschichtungsmittelventil nicht nur eine Steuerung (AN/AUS) des Beschichtungsmittelstroms, sondern auch die Auswahl eines von mehreren Beschichtungsmitteln, sodass das erfindungsgemäße Beschichtungsmittelventil auch die Funktion eines Farbwechslers erfüllt.

In dem bevorzugten Ausführungsbeispiel der Erfindung weist das Beschichtungsmittelventil genau zwei Beschichtungsmitteleinlässe auf, um zwei verschiedene Beschichtungsmittel zuführen zu können. Es besteht jedoch im Rahmen der Erfindung grundsätzlich auch die Möglichkeit, dass das erfindungsgemäße Beschichtungsmittelventil mehr als zwei Beschichtungsmitteleinlässe aufweist, beispielsweise drei oder vier Beschichtungsmitteleinlässe, um zwischen einer entsprechend größeren Anzahl von verschiedenen Farben auswählen zu können.

Gemäß der Erfindung weist das Beschichtungsmittelventil eine erste Rückführung und eine zweite Rückführung auf, wobei die beiden Rückführungen den beiden Beschichtungsmitteleinlässen zugeordnet sind und eine Rückführung des jeweiligen Beschichtungsmittels ermöglichen. Bei einer größeren Anzahl von Beschichtungsmitteleinlässen kann dann auch eine entsprechend größere Anzahl von Rückführungen vorgesehen sein, sodass jedem Beschichtungsmitteleinlass auch jeweils eine Rückführung zugeordnet ist.

Das drehbare Ventilelement verbindet die erste Rückführung in Abhängigkeit von seiner Drehstellung wahlweise mit dem ersten Beschichtungsmitteleinlass oder sperrt die erste Rückführung ab.

In gleicher Weise verbindet das drehbare Ventilelement die zweite Rückführung in Abhängigkeit von seiner Drehstellung wahlweise mit dem zweiten Beschichtungsmitteleinlass oder sperrt die zweite Rückführung ab.

Das erfindungsgemäße Beschichtungsmittelventil ermöglicht also eine Materialzirkulation durch das Beschichtungsmittelventil hindurch, wobei die Materialzirkulation in die jeweilige Rückführung von dem drehbaren Ventilelement wahlweise freigegeben oder abgesperrt werden kann.

In dem bevorzugten Ausführungsbeispiel der Erfindung weist das Beschichtungsmittelventil zusätzlich einen Spülmitteleinlass auf, über den ein Spülmittel zugeführt werden kann, wobei das drehbare Ventilelement den Spülmitteleinlass wahlweise absperrt oder mit dem Beschichtungsmittelauslass sowie dem Kanal zum Glockentelleraußenspülen verbindet. Bei einer Lackapplikation wird das drehbare Ventil dann so gedreht, dass der Spülmitteleinlass abgesperrt wird, da dann kein Spülmittel benötigt wird. Bei einem Farbwechsel wird das drehbare Ventilelement dann so gedreht, dass der Spülmitteleinlass mit dem Beschichtungsmittelauslass verbunden wird, sodass das eingangsseitig anliegende Spülmittel über den Beschichtungsmittelauslass ausgegeben wird, um beispielsweise eine Farbdüse und/oder einen Glockenteller eines Rotationszerstäubers zu spülen, wie noch detailliert beschrieben wird.

Bei dem bevorzugten Ausführungsbeispiel der Erfindung kann das drehbare Ventilelement in verschiedene Drehstellungen gedreht werden, die verschiedene Funktionen haben. Beispielsweise kann das erfindungsgemäße Beschichtungsmittelventil in den folgenden Drehstellungen folgende Funktionen erfüllen:
- Drehstellung 1: Lackieren mit Farbe 1 und gleichzeitig Spülen und Andrücken einer Farbe 2.
- Drehstellung 2: Nur Spülen und Andrücken mit Farbe 2.
- Drehstellung 3: Nur Spülen von Farbdüse und Glockenteller.
- Drehstellung 4: Nur Spülen und Andrücken von Farbe 1.
- Drehstellung 5: Spülen und Andrücken von Farbe 1 und gleichzeitig Lackieren mit Farbe 2.

In der vorstehend genannten ersten Drehstellung (Lackieren mit Farbe 1 und gleichzeitig Spülen und Andrücken einer Farbe 2) des drehbaren Ventilelements verbindet das drehbare Ventilelement dann den ersten Beschichtungsmitteleinlass mit dem Beschichtungsmittelauslass, um das erste Beschichtungsmittel (Farbe 1) zu applizieren. Die erste Rückführung wird dann jedoch von dem drehbaren Ventilelement abgesperrt, da bei einer Applikation der ersten Farbe keine Materialzirkulation der ersten Farbe benötigt wird. Darüber hinaus verbindet das drehbare Ventilelement in dieser Drehstellung den zweiten Beschichtungsmitteleinlass mit der zweiten Rückführung, um das zweite Beschichtungsmittel (Farbe 2) andrücken zu können. Schließlich sperrt das drehbare Ventilelement in dieser Drehstellung den Spülmitteleinlass ab, da kein Spülvorgang erfolgen soll.

In der vorstehend erwähnten zweiten Drehstellung (nur Spülen und Andrücken mit Farbe 2) sperrt das drehbare Ventilelement dagegen den ersten Beschichtungsmitteleinlass und die erste Rückführung ab. Dagegen verbindet das drehbare Ventilelement in dieser Drehstellung den zweiten Beschichtungsmitteleinlass mit der zweiten Rückführung, um das zweite Beschichtungsmittel anzudrücken. Schließlich sperrt das drehbare Ventilelement in dieser Drehstellung auch den Spülmitteleinlass ab, da kein Spülmittel benötigt wird.

In der vorstehend erwähnten dritten Drehstellung (nur Spülen von Farbdüse und Glockenteller) des drehbaren Ventilelements werden dagegen beide Beschichtungsmitteleinlässe und beide Rückführungen abgesperrt, wohingegen der Spülmitteleinlass mit dem Beschichtungsmittelauslass verbunden wird, um Spülmittel ausgangsseitig abzugeben, beispielsweise zum Spülen einer Farbdüse und/oder eines Glockentellers eines Rotationszerstäubers.

In der vorstehend erwähnten vierten Drehstellung (nur Spülen und Andrücken von Farbe 1) des drehbaren Ventilelements verbindet das Ventilelement dagegen den ersten Beschichtungsmitteleinlass mit der ersten Rückführung, um das erste Beschichtungsmittel andrücken zu können. Der zweite Beschichtungsmitteleinlass, die zweite Rückführung und der Spülmitteleinlass werden dagegen in dieser Drehstellung abgesperrt.

In der vorstehend erwähnten fünften Drehstellung (Spülen und Andrücken von Farbe 1 und gleichzeitig Lackieren mit Farbe 2) des drehbaren Ventilelements verbindet das Ventilelement dagegen den ersten Beschichtungseinlass mit der ersten Rückführung, um das erste Beschichtungsmittel andrücken zu können. Der zweite Beschichtungsmitteleinlass wird dagegen in dieser Drehstellung mit dem Beschichtungsauslass verbunden, um das zweite Beschichtungsmittel applizieren zu können. In dieser Drehstellung sind die zweite Rückführung und der Spülmitteleinlass dagegen abgesperrt.

Hinsichtlich der konkreten Konstruktion des erfindungsgemäßen Beschichtungsmittelventils ist zu erwähnen, dass das drehbare Ventilelement vorzugsweise im Wesentlichen zylindrisch geformt und in einem hohlzylindrischen Farbrohr drehbar angeordnet ist. Der Außendurchmesser des drehbaren Ventilelements entspricht hierbei vorzugsweise dem Innendurchmesser des hohlzylindrischen Farbrohrs.

Hierbei speist der erste Beschichtungsmitteleinlass vorzugsweise einen ersten Beschichtungsmittelkanal, der in der Wandung des Farbrohrs verläuft. Die erste Rückführung wird dagegen vorzugsweise aus einem zweiten Beschichtungsmittelkanal gespeist, der in der Wandung des Farbrohrs verläuft. Der zweite Beschichtungsmitteleinlass speist dagegen vorzugsweise einen dritten Beschichtungsmittelkanal, der ebenfalls in der Wandung des Farbrohrs verläuft. Ferner wird die zweite Rückführung vorzugsweise durch einen vierten Beschichtungsmittelkanal gespeist, der in der Wandung des Farbrohrs verläuft. Darüber hinaus verläuft in der Wandlung des Farbrohrs vorzugsweise ein fünfter Beschichtungsmittelkanal, der eingangsseitig mit dem Spülmitteleinlass verbunden ist. Schließlich ist zu erwähnen, dass der Beschichtungsmittelauslass vorzugsweise in dem drehbaren Ventilelement angeordnet ist, insbesondere mittig.

Die Beschichtungsmittelkanäle für Zuführung und Rückführung der einzelnen Beschichtungsmittel münden vorzugsweise in die Innenwand des hohlen Farbrohrs. Hierbei ist zu erwähnen, dass der Beschichtungsmittelkanal und die Rückführung für das erste Beschichtungsmittel vorzugsweise an demselben Umfangswinkel in die Innenwand des Farbrohrs einmünden, aber axial versetzt zueinander. In gleicher Weise münden vorzugsweise auch die Beschichtungsmittelkanäle für Zuführung und Rückführung des zweiten Beschichtungsmittelkanals an demselben Umfangswinkel in die Innenwand des Farbrohrs, aber axial versetzt zueinander. Die Mündungsöffnungen für die Beschichtungsmittelkanäle (Rückführung bzw. Zuführung) der verschiedenen Beschichtungsmittel sind hierbei vorzugsweise über den Umfang versetzt angeordnet.

In dem drehbaren Ventilelement ist vorzugsweise eine Stichbohrung angeordnet, die von der äußeren Mantelfläche des Ventilelements ausgeht und in den gemeinsamen Beschichtungsmittelauslass mündet. Die Stichbohrung ist hierbei so in dem Ventilelement angeordnet, dass ihre Mündungsöffnung in der Mantelfläche des drehbaren Ventilelements wahlweise mit der Mündungsöffnung des Beschichtungsmittelkanals für das erste Beschichtungsmittel oder mit der Mündungsöffnung des Beschichtungsmittelkanals für das zweite Beschichtungsmittel in der Innenwand des hohlen Farbrohrs zusammenfällt. Die Stichbohrung kann also in Abhängigkeit von der Drehstellung des drehbaren Ventilelements wahlweise mit einer der Farbzuleitungen verbunden werden.

Es wurde bereits vorstehend erwähnt, dass die Mündungsöffnungen der Beschichtungsmittelkanäle für Farbzuführung und Rückführung in der Innenwand des Farbrohrs vorzugsweise axial versetzt zueinander angeordnet sind. In der Mantelfläche des drehbaren Ventilelements befindet sich deshalb vorzugsweise jeweils eine Ausnehmung, die sich in axialer Richtung erstreckt und eine Verbindung der axial versetzten Mündungsöffnungen in der Innenwand des hohlen Farbrohrs ermöglicht. Auf diese Weise kann eine Materialzirkulation durch das Beschichtungsmittelventil freigegeben werden, indem das drehbare Ventilelement so gedreht wird, dass die Ausnehmung im Bereich der beiden axial versetzten Mündungsöffnungen in der Innenwand des Farbrohrs liegt. Die jeweilige Farbe kann dann in die Ausnehmung einströmen und aus der Ausnehmung wieder in die zugehörige Rückführung zurückströmen.

Weiterhin wurde bereits vorstehend erwähnt, dass das drehbare Ventilelement so gedreht werden kann, dass der Spülmitteleinlass mit dem Beschichtungsmittelauslass verbunden ist, sodass Spülmittel am Ausgang ausgegeben wird, um beispielsweise eine Farbdüse oder einen Glockenteller zu spülen. Darüber hinaus weist das drehbare Ventilelement vorzugsweise einen separaten Spülmittelauslass auf, um Spülmittel abzugeben, beispielsweise für eine Außenspülung eines Glockentellers eines Rotationszerstäubers. Dieser separate Spülmittelauslass ist vorzugsweise mit der vorstehend erwähnten Stichbohrung in dem drehbaren Ventilelement verbunden und wird daraus mit dem Spülmittel gespeist. Der separate Spülmittelauslass in dem drehbaren Ventilelement kann beispielsweise mit einem Außenspülkanal eines Rotationszerstäubers verbunden sein, um das Spülmittel auf die äußere Mantelfläche des Glockentellers zu leiten. Derartige Außenspülkanäle sind an sich aus dem Stand der Technik bekannt und müssen deshalb nicht näher beschrieben werden.

Darüber hinaus umfasst das erfindungsgemäße Beschichtungsmittelventil vorzugsweise auch einen Ventilantrieb, um das drehbare Ventilelement in die gewünschte Drehstellung zu drehen. Beispielsweise kann der Ventilantrieb elektrisch, pneumatisch oder hydraulisch arbeiten.

In dem bevorzugten Ausführungsbeispiel der Erfindung arbeitet der Ventilantrieb jedoch pneumatisch und weist hierzu eine Antriebskammer auf, in die Steuerluft eingeleitet werden kann, um das drehbare Ventilelement in die gewünschte Drehstellung zu drehen. In der Antriebskammer ist ein Schwenkflügel schwenkbar angeordnet, wobei der Schwenkflügel mechanisch mit dem drehbaren Ventilelement verbunden ist, sodass eine Drehung des Schwenkflügels auch das Ventilelement dreht. Der Schwenkflügel in der Antriebskammer kann dann wahlweise auf der einen Seite oder auf der anderen Seite mit Druckluft beaufschlagt werden, um den Schwenkflügel und damit auch das drehbare Ventilelement wahlweise in die eine oder in die andere Richtung zu drehen. Hierzu münden in die Antriebskammer auf den gegenüberliegenden Seiten des Schwenkflügels vorzugsweise zwei Steuerluftanschlüsse.

Darüber hinaus weist der erfindungsgemäße Ventilantrieb vorzugsweise mehrere Drehwinkelanschläge auf, die den Schwenkwinkel des Schwenkflügels und damit auch den Drehwinkel des drehbaren Ventilelements jeweils an vorgegebenen Winkelstellungen begrenzen, wobei die Winkelstellungen den vorstehend beschriebenen verschiedenen funktionsgemäßen Drehstellungen des drehbaren Ventilelements entsprechen. In dem bevorzugten Ausführungsbeispiel sind die Drehwinkelanschläge jeweils aktivierbar und deaktivierbar, wobei die Drehwinkelanschläge in einer aktivierten Stellung den Schwenkwinkel des Schwenkflügels begrenzen, wohingegen die Drehwinkelanschläge in einer deaktivierten Stellung den Schwenkwinkel des Schwenkflügels nicht begrenzen. Beispielsweise können die Drehwinkelanschläge jeweils einen Schieber aufweisen, der in der aktivierten Stellung in die Antriebskammer hineingeschoben ist und den Schwenkflügel dadurch blockiert, wohingegen der Schieber in der deaktivierten Stellung aus der Antriebskammer herausgezogen ist und den Schwenkflügel dann nicht blockiert.

Aus der vorstehenden Beschreibung ist bereits ersichtlich, dass das erfindungsgemäße Beschichtungsmittelventil als Wechselventil ausgebildet sein kann mit einem gemeinsamen Auslass und mehreren Einlässen, wobei das Beschichtungsmittelventil wahlweise einen der Einlässe mit dem gemeinsamen Auslass verbindet.

Schließlich ist zu erwähnen, dass die Erfindung nicht beschränkt ist auf das vorstehend beschriebene Beschichtungsmittelventil als einzelnes Bauteil. Vielmehr beansprucht die Erfindung auch Schutz für ein komplettes Applikationsgerät (z. B. Rotationszerstäuber) zur Applikation eines Beschichtungsmittels, wobei das erfindungsgemäße Applikationsgerät mit dem eingangs beschriebenen erfindungsgemäßen Beschichtungsmittelventil ausgestattet ist. Das erfindungsgemäße Beschichtungsmittelventil dient hierbei vorzugsweise als Hauptventil und steuert die Beschichtungsmittelabgabe. Dies bedeutet, dass sich stromabwärts hinter dem Hauptventil kein weiteres Ventil befindet. Der Einsatz des erfindungsgemäßen Beschichtungsmittelventils als Hauptventil in einem Applikationsgerät (z. B. Rotationszerstäuber) bietet den Vorteil, dass kein zusätzliches Kurzspülventil erforderlich ist, um das Leitungsvolumen stromabwärts hinter dem Beschichtungsmittelventil zu spülen.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1A: eine schematische Perspektivansicht eines erfindungsgemäßen Beschichtungsmittelventils in einer ersten Drehstellung zum Lackieren mit einer ersten Farbe und zum Spülen bzw. Andrücken einer zweiten Farbe,
- Figur 1B: eine Querschnittsansicht durch das Beschichtungsmittelventil in der Drehstellung gemäß Figur 1A,
- Figur 1C: eine schematische Darstellung des pneumatischen Ventilantriebs in der Drehstellung gemäß den Figuren 1A und 1B,
- Figur 2A: das Beschichtungsmittelventil gemäß den Figuren 1A-1C in einer zweiten Drehstellung zum Spülen und Andrücken der zweiten Farbe,
- Figur 2B: die Querschnittsansicht gemäß Figur 1B in der zweiten Drehstellung,
- Figur 2C: die Darstellung gemäß Figur 1C in der zweiten Drehstellung,
- Figuren 3A-3C: entsprechende Darstellungen in einer dritten Drehstellung zum Spülen von Farbdüse und Glockenteller,
- Figuren 4A-4C: entsprechende Darstellungen in einer vierten Drehstellung zum Spülen bzw. Andrücken der ersten Farbe,
- Figuren 5A-5C: entsprechende Darstellungen in einer fünften Drehstellung zum Spülen bzw. Andrücken der ersten Farbe und zum Lackieren mit der zweiten Farbe,
- Figur 6: eine Tabelle zur Verdeutlichung der technischen Funktion der verschiedenen Drehstellungen, sowie
- Figur 7: eine vereinfachte, schematische Darstellung eines erfindungsgemäßen Rotationszerstäubers mit einem erfindungsgemäßen Beschichtungsmittelventil.

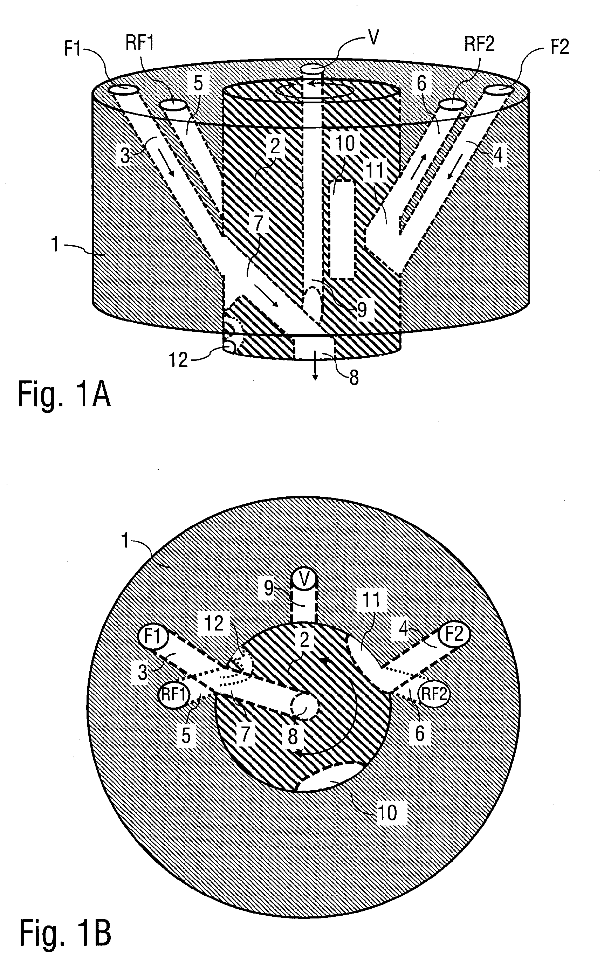

Die Figuren 1A-5C zeigen verschiedene Darstellungen und verschiedene Drehstellungen eines erfindungsgemäßen Beschichtungsventils, das beispielsweise in einem Rotationszerstäuber als Hauptventil eingesetzt werden kann.

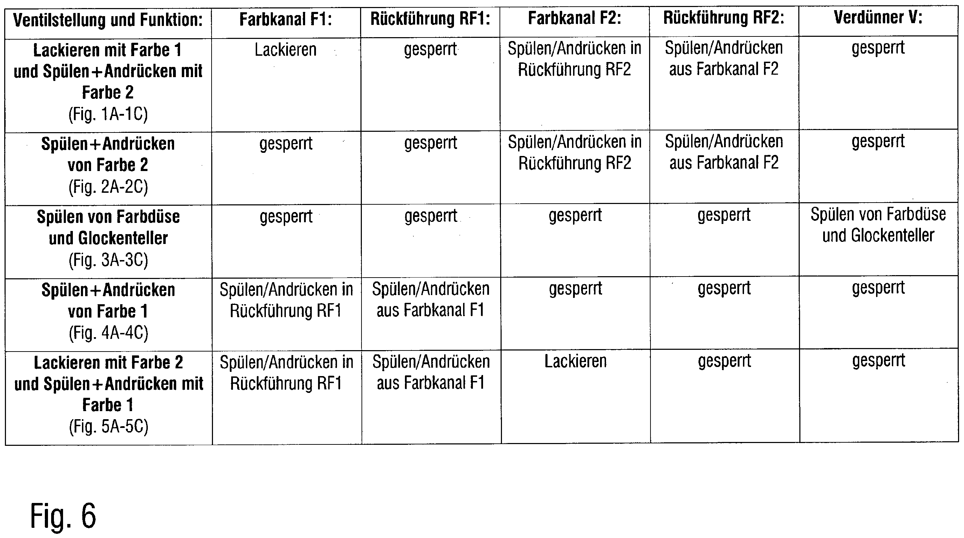

Die Tabelle in Figur 6 erläutert hierbei die verschiedenen technischen Funktionen der einzelnen Drehstellungen des Beschichtungsmittelventils, was nachfolgend noch detailliert beschrieben wird.

Die Figuren 1A, 2A, 3A, 4A und 5A zeigen jeweils eine schematische Perspektivansicht des erfindungsgemäßen Beschichtungsmittelventils in den verschiedenen Drehstellungen.

Die Figuren 1B, 2B, 3B, 4B und 5B zeigen dagegen jeweils eine Querschnittsansicht des erfindungsgemäßen Beschichtungsmittelventils in den verschiedenen Drehstellungen.

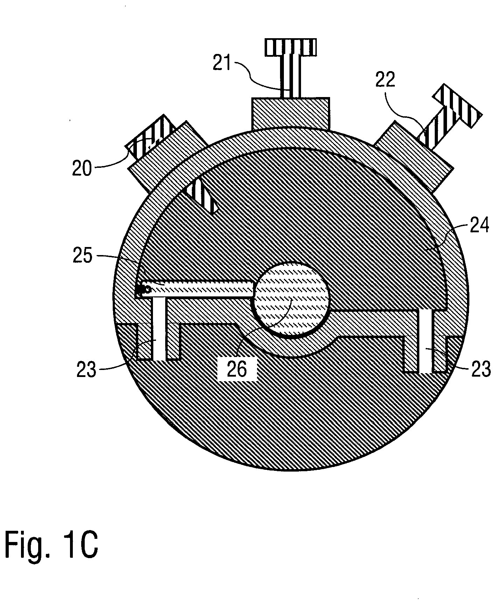

Die Figuren 1C, 2C, 3C, 4C und 5c zeigen dagegen eine vereinfachte Ansicht des erfindungsgemäßen pneumatischen Ventilantriebs in den verschiedenen Drehstellungen.

Das Beschichtungsmittelventil weist zunächst ein hohlzylindrisches Farbrohr 1 auf, in dem ein zylindrisches Ventilelement 2 drehbar angeordnet ist.

In dem Farbrohr 1 befinden sich zwei Farbeinlässe F1, F2, über die verschiedenfarbige Lacke zugeführt werden können. Die beiden Farbeinlässe F1, F2 münden jeweils in Farbkanäle 3 bzw. 4, die in der Wandung des Farbrohrs 1 schräg zur Längsachse verlaufen und schließlich in die Innenwand des hohlzylindrischen Farbrohrs 1 ausmünden.

Darüber hinaus befinden sich in dem Farbrohr 1 zwei Rückführauslässe RF1 bzw. RF2 zur Rückführung der Farben im Rahmen einer Materialzirkulation. Die Rückführauslässe RF1, RF2 werden aus zwei Rückführkanälen 5 bzw. 6 gespeist, die in der Wandung des Farbrohrs 1 verlaufen. Die Rückführkanäle 5, 6 verlaufen in der Wandung des Farbrohrs 1 schräg zur Längsachse und münden in der Innenwand des hohlzylindrischen Farbrohrs 1 aus.

Die Mündungsöffnung des Farbkanals 3 in der Innenwand des Farbrohrs 1 ist hierbei in demselben Umfangswinkel angeordnet wie die Mündungsöffnung des Rückführkanals 5, aber axial versetzt dazu.

In gleicher Weise ist auch die Mündungsöffnung des Farbkanals 4 in der Innenwand des Farbrohrs 1 an dem gleichen Umfangswinkel angeordnet wie die Mündungsöffnung des Rückführkanals 6, aber axial versetzt dazu.

In dem drehbaren Ventilelement 2 verläuft eine Stichbohrung 7 zu einem Auslass 8, wobei über den Auslass 8 Lack bzw. Spülmittel zur Farbdüse des Rotationszerstäubers abgegeben werden kann. Die Stichbohrung 7 mündet in der äußeren Mantelfläche des drehbaren Ventilelements 2 an der axialen Position, in der auch der Farbkanal 3 bzw. der Farbkanal 4 ausmündet. Dies bedeutet, dass die Stichbohrung 7 bei einer geeigneten Drehstellung des drehbaren Ventilelements 2 eine Fluidverbindung herstellen kann wahlweise zu dem Farbkanal 3 oder zu dem Farbkanal 4.

In der Wandung des Farbrohrs 1 verläuft auch ein Spülmittelkanal 9, der von einem Spülmitteleinlass V gespeist wird. Der Spülmittelkanal 9 verläuft ebenfalls schräg zur Längsachse und mündet schließlich in der Innenwand des Farbrohrs 1 aus und zwar in axialer Richtung etwas unterhalb der Mündungsöffnungen des Farbkanals 3 und des Farbkanals 4. Bei einer geeigneten Drehung des drehbaren Ventilelements 2 kann die Stichbohrung 7 dann eine Fluidverbindung herstellen zu dem Spülmittelkanal 9, sodass Spülmittel von dem Spülmitteleinlass V zu dem Auslass 8 strömen kann.

In der äußeren Mantelfläche des drehbaren Ventilelements 2 befinden sich zwei Ausnehmungen 10, 11, die sich in axialer Richtung erstrecken und den axialen Abstand zwischen den Mündungsöffnungen des Farbkanals 4 und des Rückführkanals 1 sowie den axialen Abstand zwischen den Mündungsöffnungen des Farbkanals 3 und des Rückführkanals 5 überdecken. Bei einer geeigneten Drehung des drehbaren Ventilelements 2 ermöglichen die Ausnehmungen 10, 11 eine Fluidverbindung zwischen dem Farbkanal 3 und dem Rückführkanal 5 bzw. zwischen dem Farbkanal 4 und dem Rückführkanal 6, wie noch beschrieben wird.

Ferner ist in dem drehbaren Ventilelement 2 ein separater Spülmittelauslass 12 vorgesehen, der von der Stichbohrung 7 mit Spülmittel gespeist werden kann, wobei der Spülmittelauslass 12 in einen Außenspülkanal des Rotationszerstäubers mündet.

Weiterhin zeigen die Darstellungen einen pneumatischen Ventilantrieb zum Drehen des drehbaren Ventilelements in die gewünschte Drehstellung.

Der pneumatische Ventilantrieb weist mehrere Drehwinkelanschläge 20, 21, 22 auf, die wahlweise aktivierbar oder deaktivierbar sind.

Darüber hinaus weist der pneumatische Ventilantrieb zwei Antriebslufteinlässe 23 auf, wobei die beiden Antriebslufteinlässe 23 in eine Antriebskammer 24 münden, in der ein Schwenkflügel 25 schwenkbar ist, wobei der Schwenkflügel 25 auf eine Ventilwelle 26 wirkt, die mechanisch mit dem drehbaren Ventilelement 2 verbunden ist. Bei einer Druckbeaufschlagung an dem in der Zeichnung rechten Antriebslufteinlass 23 wird der Schwenkflügel 25 also in der Zeichnung entgegen dem Uhrzeigersinn gedreht. Bei einer Druckbeaufschlagung an dem in der Zeichnung linken Antriebslufteinlass 23 wird der Schwenkflügel 25 dagegen in der Zeichnung im Uhrzeigersinn gedreht.

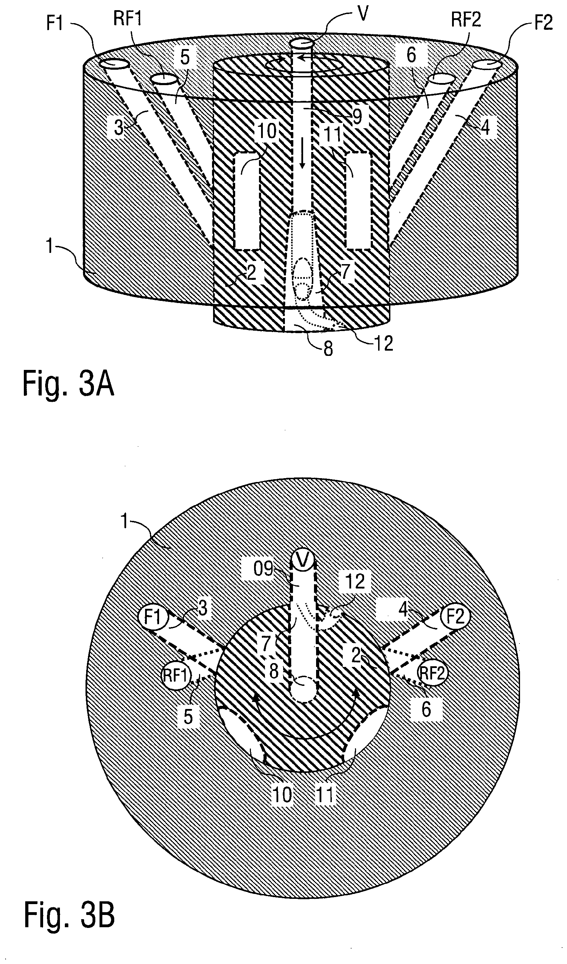

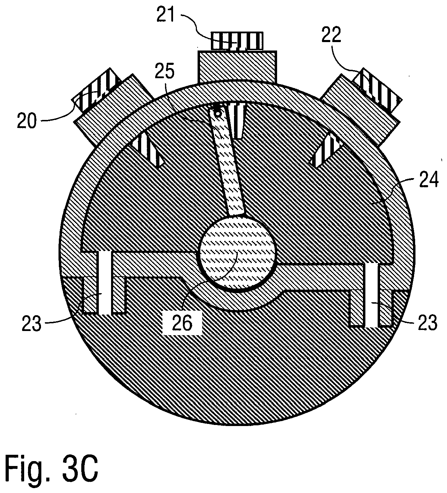

Der Schwenkwinkel des Schwenkflügels 25 kann hierbei mittels der Drehwinkelanschläge 20-22 begrenzt werden, indem der gewünschte Drehwinkelanschlag 20-22 aktiviert wird. Daraufhin fährt dann ein Schieber radial nach innen in die Antriebskammer 24 und begrenzt dadurch den Drehwinkel des Schwenkflügels. In der Zeichnung gemäß Figur 1C ist der Drehwinkelanschlag 20 aktiviert, wohingegen die Drehwinkelanschläge 21, 22 deaktiviert sind. In der Zeichnung gemäß Figur 3C sind dagegen alle Drehwinkelanschläge 20-22 aktiviert.

Im Folgenden werden nun die technischen Funktionen der verschiedenen Drehstellungen des drehbaren Ventilelements 2 beschrieben, wobei auf die Tabelle gemäß Figur 6 Bezug genommen wird.

Die Figuren 1A-1C zeigen eine erste Drehstellung des Ventilelements 2, die dazu dient, über den Farbeinlass F1 Lack zu applizieren, während über den Farbeinlass F2 und den Rückführauslass RF2 gespült und mit einer neuen Farbe angedrückt werden kann.

Das drehbare Ventilelement 2 ist dann so gedreht, dass die Stichbohrung 7 in dem drehbaren Ventilelement 2 eine Fluidverbindung herstellt zu dem Farbkanal 3. Dies bedeutet, dass Farbe von dem Farbeinlass F1 durch den Farbkanal 3 und die Stichbohrung 7 zu dem Auslass 8 strömen kann.

Der Rückführkanal 5 wird dann jedoch von der Mantelfläche des drehbaren Ventilelements 2 abgesperrt.

In dieser Drehstellung stellt die Ausnehmung 11 in der Mantelfläche des drehbaren Ventilelements 2 eine Fluidverbindung her zwischen dem Farbkanal 4 und dem Rückführkanal 6, sodass über den Farbkanal 4 und den Rückführkanal 6 gespült und mit neuer Farbe angedrückt werden kann.

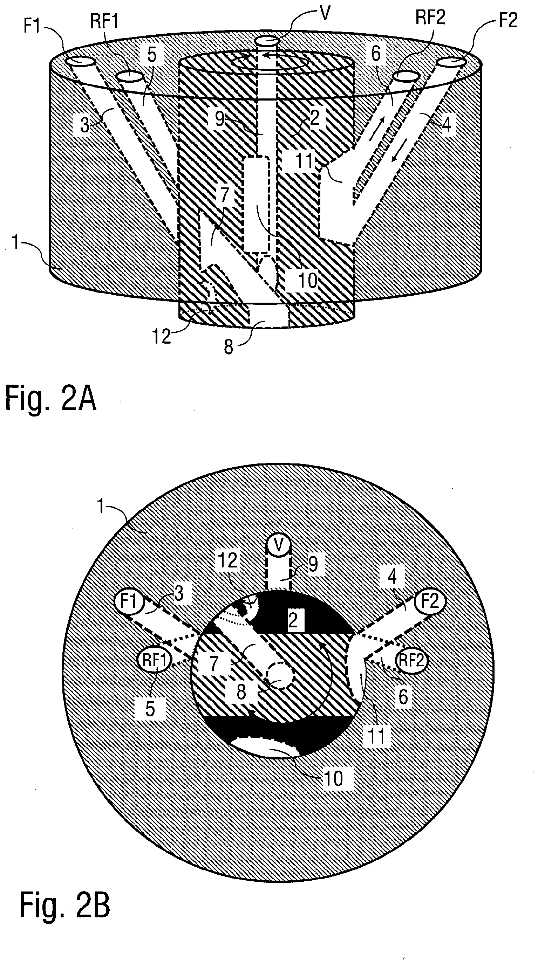

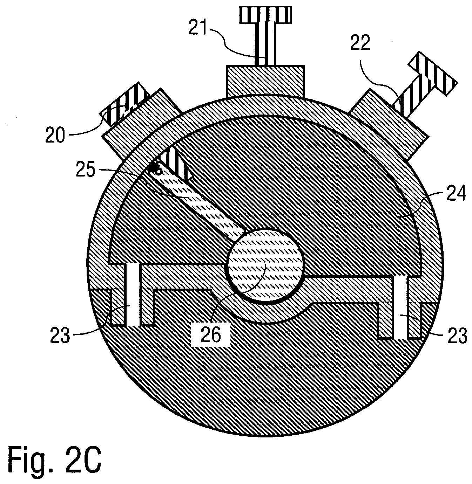

Die Figuren 2A-2C zeigen dagegen eine andere Drehstellung des drehbaren Ventilelements 2, in der kein Lack appliziert wird, sondern nur über den Farbeinlass F2 gespült und mit neuer Farbe angedrückt werden kann.

In dieser Drehstellung des drehbaren Ventilelements werden der Farbkanal 3 und der Rückführkanal 5 von der äußeren Mantelfläche des drehbaren Ventilelements 2 abgesperrt.

Die Ausnehmung 11 in der äußeren Mantelfläche des drehbaren Ventilelements 2 stellt dagegen eine Fluidverbindung her zwischen dem Farbkanal 4 und dem Rückführkanal 6.

In der Drehstellung gemäß den Figuren 3A-3C soll dagegen die Farbdüse des Rotationszerstäubers gespült werden.

Das drehbare Ventilelement 2 sperrt dann mit seiner äußeren Mantelfläche die beiden Farbkanäle 3, 4 und die beiden Rückführkanäle 5, 6 ab.

Allerdings stellt die Stichbohrung 7 dann eine Fluidverbindung her zu dem Spülmittelkanal 9, sodass Spülmittel von dem Spülmitteleinlass V zu dem Auslass 8 strömen kann.

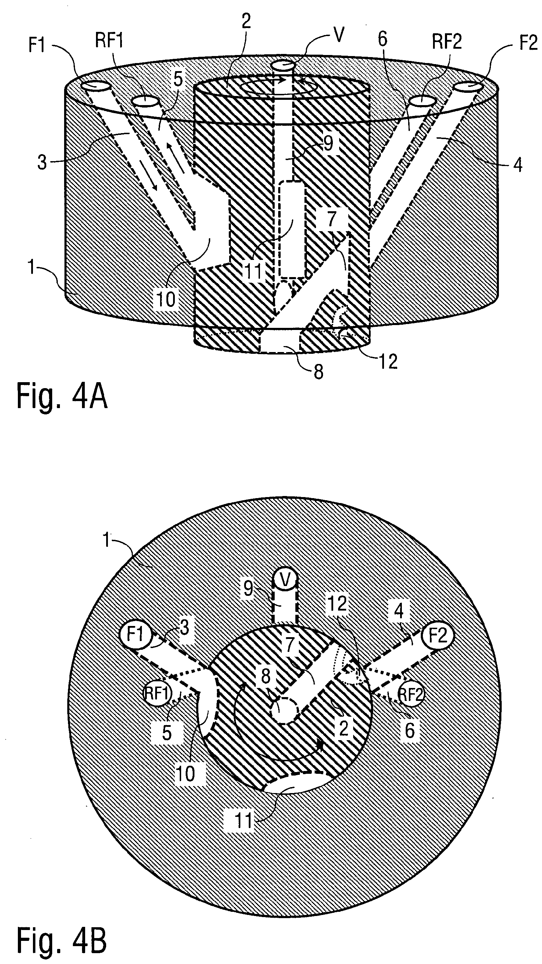

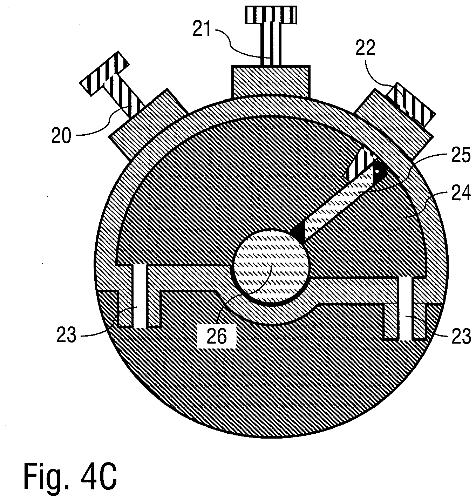

In der Drehstellung gemäß den Figuren 4A-4C erfolgt dagegen ein Spülen und Andrücken neuer Farbe über den Farbeinlass F1. In dieser Drehstellung stellt die Ausnehmung 10 in der Mantelfläche des drehbaren Ventilelements 2 eine Fluidverbindung her zwischen dem Farbkanal 3 und dem Rückführkanal 5.

Allerdings dichtet dann die äußere Mantelfläche des drehbaren Ventilelements 2 die Mündungsöffnungen des Farbkanals 4 und des Rückführkanals 8 ab.

Darüber hinaus dichtet das drehbare Ventilelement 2 dann mit seiner äußeren Mantelfläche auch die Mündungsöffnung des Spülmittelkanals in der Innenwand des hohlen Farbrohrs 1 ab, sodass kein Spülmittel aus dem Spülmittelkanal 9 zu dem Auslass 8 strömen kann.

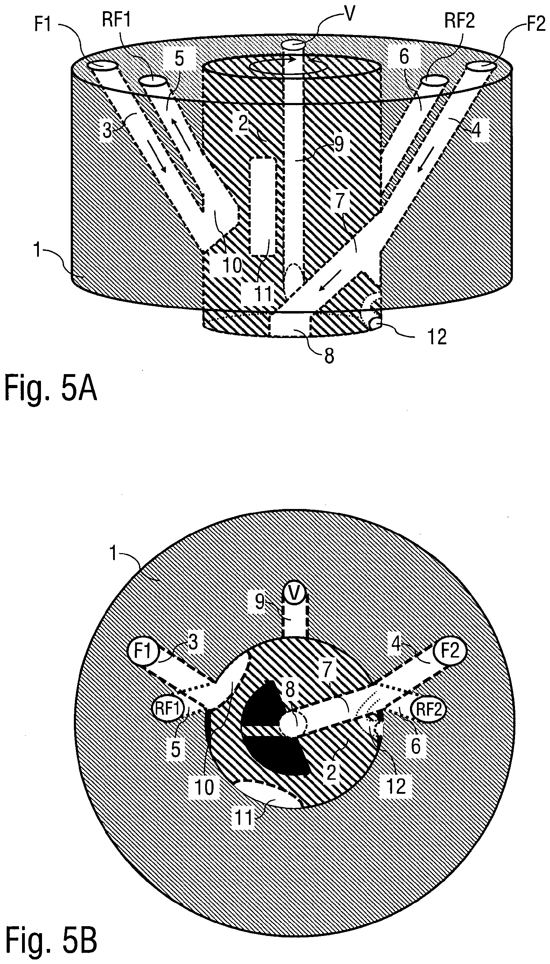

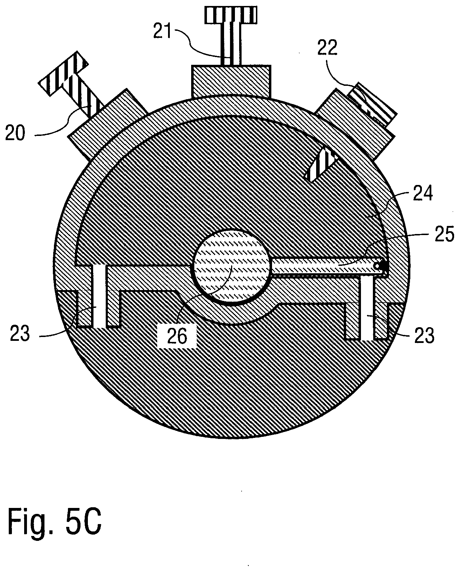

In der Drehstellung gemäß den Figuren 5A-5C ist dagegen vorgesehen, dass über den Farbeinlass F1 gespült und eine neue Farbe angedrückt wird, während über den Farbeinsatz F2 gleichzeitig Lack appliziert wird.

Die Ausnehmung 10 in der äußeren Mantelfläche des drehbaren Ventilelements 2 stellt dann eine Fluidverbindung her zwischen dem Farbkanal 3 und dem Rückführkanal 5, um eine Materialzirkulation zu ermöglichen.

Die Stichbohrung 7 in dem drehbaren Ventilelement 2 stellt dagegen dann eine Fluidverbindung her zu dem Farbkanal 4, sodass der Lack von dem Farbeinlass F2 durch den Farbkanal 4 und die Stichbohrung 7 zu dem Auslass 8 strömen kann.

Die Figuren 1C, 2C, 3C, 4C, 5C zeigen hierbei jeweils die zugehörigen Drehstellungen des Schwenkflügels 25 und den Aktivierungszustand der Drehwinkelanschläge 20-22.

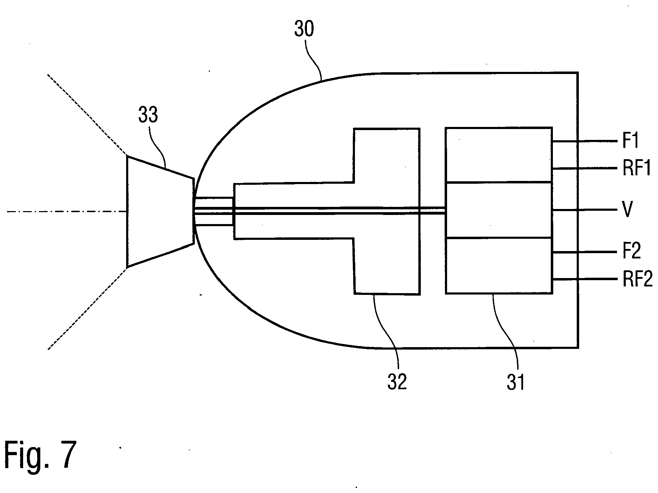

Schließlich zeigt Figur 7 eine grob vereinfachte Darstellung eines erfindungsgemäßen Rotationszerstäubers 30, der mit einem erfindungsgemäßen Beschichtungsmittelventil 31 als Hauptventil ausgestattet ist. Die Darstellung dient hierbei nur zur Verdeutlichung der Funktion des Beschichtungsmittelventils 31 und gibt keine konkret realisierte Gestaltung wieder. In dem Rotationszerstäuber 30 befindet sich auch eine Turbine 32 zum Drehen eines Glockentellers 33. Das Beschichtungsmittelventil 31 wählt hierbei von den beiden Farbeinlässen F1, F2 einen aus und leitet die daran anliegende Farbe dann zur Applikation an den Glockenteller 33 weiter. Darüber hinaus ermöglicht das Beschichtungsmittelventil 31 auch die Auswahl von Spülmittel an dem Spülmitteleinlass V zur Weiterleitung zu dem Glockenteller 33.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich der angehängten Ansprüchen fallen.

### Bezugszeichenliste:

- 1: Farbrohr
- 2: Drehbares Ventilelement
- 3: Farbkanal für Farbe F1
- 4: Farbkanal für Farbe F2
- 5: Rückführkanal für Farbe F1
- 6: Rückführkanal für Farbe F2
- 7: Stichbohrung in dem drehbaren Ventilelement
- 8: Auslass zur Farbdüse
- 9: Spülmittelkanal
- 10: Ausnehmung in der Wandung des drehbaren Ventilelements
- 11: Ausnehmung in der Wandung des drehbaren Ventilelements
- 12: Spülmitteleinlass für das Außenspülen des Glockenteller
- 20: Drehwinkelanschlag für Spülen/Andrücken Farbe F2
- 21: Drehwinkelanschlag für Spülen von Farbdüse und Glockenteller
- 22: Drehwinkelanschlag für Spülen/Andrücken Farbe F1
- 23: Antriebslufteinlässe/-auslässe
- 24: Antriebskammer
- 25: Schwenkflügel
- 26: Ventilwelle (mechanisch mit drehbarem Ventilelement verbunden)
- 30: Rotationszerstäuber
- 31: Beschichtungsmittelventil
- 32: Turbine
- 33: Glockenteller
- F1: Farbeinlass
- F2: Farbeinlass
- RF1: Rückführauslass für Farbe F1
- RF2: Rückführauslass für Farbe F2
- V: Spülmitteleinlass

## Patentansprüche

1. Beschichtungsmittelventil (31) zur Steuerung eines Beschichtungsmittelstroms eines Beschichtungsmittels in einem Applikationsgerät, insbesondere in einem Zerstäuber, mit
a) einem drehbar beweglichen Ventilelement (2), das den Beschichtungsmittelstrom in Abhängigkeit von seiner Drehstellung steuert,
b) einem ersten Beschichtungsmitteleinlass (F1) zur Zuführung eines ersten Beschichtungsmittels,
c) einem zweiten Beschichtungsmitteleinlass (F2) zur Zuführung eines zweiten Beschichtungsmittels, und
d) einem Beschichtungsmittelauslass (8) zur Abgabe wahlweise des ersten Beschichtungsmittels oder des zweiten Beschichtungsmittels, wobei das drehbare Ventilelement (2) den Beschichtungsmittelauslass (8) in Abhängigkeit von seiner Drehstellung wahlweise mit dem ersten Beschichtungsmitteleinlass (F1) oder mit dem zweiten Beschichtungsmitteleinlass (F2) verbindet,
**gekennzeichnet durch**
e) eine erste Rückführung (RF1) zur Rückführung des ersten Beschichtungsmittels, wobei das drehbare Ventilelement (2) in Abhängigkeit von seiner Drehstellung die erste Rückführung (RF1) wahlweise absperrt oder mit dem ersten Beschichtungsmitteleinlass (F1) verbindet, und
f) eine zweite Rückführung (RF2) zur Rückführung des zweiten Beschichtungsmittels, wobei das drehbare Ventilelement (2) in Abhängigkeit von seiner Drehstellung die zweite Rückführung (RF2) wahlweise absperrt oder mit dem zweiten Beschichtungsmitteleinlass (F2) verbindet.

2. Beschichtungsmittelventil (31) nach Anspruch 1, **gekennzeichnet durch**
a) einen Spülmitteleinlass (V) zur Zuführung eines Spülmittels,
b) wobei das drehbare Ventilelement (2) den Spülmitteleinlass (V) wahlweise absperrt oder mit dem Beschichtungsmittelauslass (8) verbindet, und/oder
c) wobei das drehbare Ventilelement (2) den Spülmitteleinlass (V) wahlweise absperrt oder mit einem Außenspülkanal zum Glockentelleraußenspülen (12) verbindet.

3. Beschichtungsmittelventil (31) nach einem der vorhergehenden Ansprüche, **gekennzeichnet durch**
a) eine erste Drehstellung (Fig. 1A-1C) des drehbaren Ventilelements (2), in der das drehbare Ventilelement (2)
a1) den ersten Beschichtungsmitteleinlass (F1) mit dem Beschichtungsmittelauslass (8) verbindet, um das erste Beschichtungsmittel zu applizieren,
a2) die erste Rückführung (RF1) absperrt,
a3) den zweiten Beschichtungsmitteleinlass (F2) mit der zweiten Rückführung (RF2) verbindet, um das zweite Beschichtungsmittel anzudrücken, und
a4) den Spülmitteleinlass (V) absperrt,
b) eine zweite Drehstellung (Fig. 2A-2C) des drehbaren Ventilelements (2), in der das drehbare Ventilelement (2)
b1) den ersten Beschichtungsmitteleinlass (F1) absperrt,
b2) die erste Rückführung (RF1) absperrt,
b3) den zweiten Beschichtungsmitteleinlass (F2) mit der zweiten Rückführung (RF2) verbindet, um das zweite Beschichtungsmittel anzudrücken, und
b4) den Spülmitteleinlass (V) absperrt,
c) eine dritte Drehstellung (Fig. 3A-3C) des drehbaren Ventilelements (2), in der das drehbare Ventilelement (2)
c1) den ersten Beschichtungsmitteleinlass (F1) absperrt,
c2) die erste Rückführung (RF1) absperrt,
c3) den zweiten Beschichtungsmitteleinlass (F2) absperrt,
c4) die zweite Rückführung (RF2) absperrt und
c5) den Spülmitteleinlass (V) mit dem Beschichtungsmittelauslass (8) und/oder mit dem Außenspülkanal verbindet,
d) eine vierte Drehstellung (Fig. 4A-4C) des drehbaren Ventilelements (2), in der das drehbare Ventilelement (2)
d1) den ersten Beschichtungsmitteleinlass (F1) mit der ersten Rückführung (RF1) verbindet,
d2) den zweiten Beschichtungsmitteleinlass (F2) absperrt,
d3) die zweite Rückführung (RF2) absperrt und
d4) den Spülmitteleinlass (V) absperrt,
e) eine fünfte Drehstellung (Fig. 5A-5C) des drehbaren Ventilelements (2), in der das drehbare Ventilelement (2)
e1) den ersten Beschichtungsmitteleinlass (F1) mit der ersten Rückführung (RF1) verbindet,
e2) den zweiten Beschichtungsmitteleinlass (F2) mit dem Beschichtungsmittelauslass (8) verbindet,
e3) die zweite Rückführung (RF2) absperrt und
e4) den Spülmitteleinlass (V) absperrt.

4. Beschichtungsmittelventil (31) nach einem der vorhergehenden Ansprüche, **dadurch gekennzeichnet,**
a) **dass** das drehbare Ventilelement (2) im Wesentlichen zylindrisch geformt und in einem hohlzylindrischen Farbrohr (1) drehbar angeordnet ist, und
b) **dass** der erste Beschichtungsmitteleinlass (F1) einen ersten Beschichtungsmittelkanal (3) speist, der in der Wandung des Farbrohrs (1) verläuft,
c) **dass** die erste Rückführung (RF1) aus einem zweiten Beschichtungsmittelkanal (5) gespeist wird, der in der Wandung des Farbrohrs (1) verläuft,
d) **dass** der zweite Beschichtungsmitteleinlass (F2) einen dritten Beschichtungsmittelkanal (4) speist, der in der Wandung des Farbrohrs (1) verläuft,
e) **dass** die zweite Rückführung (RF2) aus einem vierten Beschichtungsmittelkanal (6) gespeist wird, der in der Wandung des Farbrohrs (1) verläuft,
f) **dass** der Spülmitteleinlass (V) einen fünften Beschichtungsmittelkanal (9) speist, der in der Wandung des Farbrohrs (1) verläuft, und/oder
g) **dass** der Beschichtungsmittelauslass (8) in dem drehbaren Ventilelement (2) angeordnet ist, insbesondere mittig.

5. Beschichtungsmittelventil (31) nach Anspruch 4, **dadurch gekennzeichnet,**
a) **dass** der von dem ersten Beschichtungsmitteleinlass (F1) ausgehende erste Beschichtungsmittelkanal (3) an demselben Umfangswinkel in die Innenwand des Farbrohrs (1) mündet wie der von der ersten Rückführung (RF1) zweite Beschichtungsmittelkanal (5),
b) **dass** der von dem ersten Beschichtungsmitteleinlass (F1) ausgehende erste Beschichtungsmittelkanal (3) axial versetzt zu dem von der ersten Rückführung (RF1) ausgehenden zweiten Beschichtungsmittelkanal (5) in die Innenwand des Farbrohrs (1) mündet,
c) **dass** der von dem zweiten Beschichtungsmitteleinlass (F2) ausgehende dritte Beschichtungsmittelkanal (4) an demselben Umfangswinkel in die Innenwand des Farbrohrs (1) mündet wie der von der zweiten Rückführung (RF2) ausgehende vierte Beschichtungsmittelkanal (6),
d) **dass** der von dem zweiten Beschichtungsmitteleinlass (F2) ausgehende dritte Beschichtungsmittelkanal (4) axial versetzt zu dem von der zweiten Rückführung (RF2) ausgehenden vierten Beschichtungsmittelkanal (6) in die Innenwand des Farbrohrs (1) mündet, und
e) **dass** der erste Beschichtungsmittelkanal (3) und der zweite Beschichtungsmittelkanal (5) einerseits und der dritte Beschichtungsmittelkanal (4) und der vierte Beschichtungsmittelkanal (6) andererseits an verschiedenen Umfangswinkeln in die Innenwand des Farbrohrs (1) münden.

6. Beschichtungsmittelventil (31) nach Anspruch 5, **dadurch gekennzeichnet,**
a) **dass** in dem drehbaren Ventilelement (2) eine Stichbohrung (7) verläuft, die von der äußeren Mantelfläche des Ventilelements (2) ausgeht und in den Beschichtungsmittelauslass (8) mündet, und
b) **dass** die Stichbohrung (7) in dem drehbaren Ventilelement (2) in Abhängigkeit von der Drehstellung des Ventilelements (2) aus dem ersten Beschichtungsmittelkanal (3) mit dem ersten Beschichtungsmittel oder aus dem dritten Beschichtungsmittelkanal (4) mit dem zweiten Beschichtungsmittel gespeist werden kann.

7. Beschichtungsmittelventil (31) nach Anspruch 5 oder 6, **dadurch gekennzeichnet,**
a) **dass** das drehbare Ventilelement (2) in seiner äußeren Mantelfläche eine erste Ausnehmung (10) aufweist, die sich in axialer Richtung erstreckt,
b) **dass** die erste Ausnehmung (10) in Abhängigkeit von der Drehstellung den ersten Beschichtungsmittelkanal (3) mit dem zweiten Beschichtungsmittelkanal (5) verbindet,
c) **dass** das drehbare Ventilelement (2) in seiner äußeren Mantelfläche eine zweite Ausnehmung (11) aufweist, die sich in axialer Richtung erstreckt,
d) **dass** die zweite Ausnehmung (11) in Abhängigkeit von der Drehstellung den dritten Beschichtungsmittelkanal (4) mit dem vierten Beschichtungsmittelkanal (6) verbindet.

8. Beschichtungsmittelventil (31) nach einem der vorhergehenden Ansprüche, **dadurch gekennzeichnet,**
a) **dass** in dem drehbaren Ventilelement (2) ein Spülmittelausgang (12) angeordnet ist zur Abgabe von Spülmittel für eine Außenspülung eines Glockentellers (33) eines Rotationszerstäubers (30), und/oder
b) **dass** der Spülmittelausgang (12) mit der Stichbohrung (7) in dem drehbaren Ventilelement (2) verbunden ist, und/oder
c) **dass** der Spülmittelausgang (12) mit einem Außenspülkanal eines Rotationszerstäubers (30) verbunden ist, der das Spülmittel auf die äußere Mantelfläche des Glockentellers (33) leitet, und/oder
d) **dass** ein Ventilantrieb vorgesehen ist zum Drehen des Ventilelements (2), insbesondere als elektrischer, pneumatischer oder hydraulischer Ventilantrieb.

9. Beschichtungsmittelventil (31) nach Anspruch 8, **dadurch gekennzeichnet,**
a) **dass** der Ventilantrieb eine Antriebskammer (24) aufweist, welche die Rotationsachse des drehbaren Ventilelements (2) mindestens teilweise ringförmig umgibt, und
b) **dass** das drehbare Ventilelement (2) mechanisch mit einem Schwenkflügel (25) verbunden ist, der in der Antriebskammer (24) schwenkbar ist, so dass ein Schwenken des Schwenkflügels (25) zu einer entsprechenden Drehung des Ventilelements (2) führt, und
c) **dass** ein erster Antriebslufteinlass (23) in die Antriebskammer (24) mündet, um den Schwenkflügel (25) und damit auch das Ventilelement (2) in eine erste Drehrichtung zu drehen, und
d) **dass** ein zweiter Antriebslufteinlass (23) in die Antriebskammer (24) mündet, um den Schwenkflügel (25) und damit auch das Ventilelement (2) in eine zweite Drehrichtung zu drehen, wobei die zweite Drehrichtung der ersten Drehrichtung entgegen gesetzt ist.

10. Beschichtungsmittelventil (31) nach Anspruch 9, **dadurch gekennzeichnet,**
a) **dass** mehrere Drehwinkelanschläge (20-22) vorgesehen sind, die den Schwenkwinkel des Schwenkflügels (25) jeweils an verschiedenen Winkelstellungen begrenzen, und/oder
b) **dass** die Drehwinkelanschläge (20-22) jeweils aktivierbar und deaktivierbar sind, wobei die Drehwinkelanschläge (20-22) in einer aktivierten Stellung den Schwenkwinkel des Schwenkflügels (25) begrenzen, wohingegen die Drehwinkelanschläge (20-22) in einer deaktivierten Stellung den Schwenkwinkel des Schwenkflügels (25) nicht begrenzen.

11. Beschichtungsmittelventil (31) nach Anspruch 10, **dadurch gekennzeichnet,**
a) **dass** die Drehwinkelanschläge (20-22) jeweils einen Schieber aufweisen,
b) **dass** der Schieber in der aktivierten Stellung in die Antriebskammer (24) hinein geschoben ist und den Schwenkflügel (25) blockiert, und
c) **dass** der Schieber in der deaktivierten Stellung aus der Antriebskammer (24) heraus gezogen ist und den Schwenkflügel (25) nicht blockiert.

12. Beschichtungsmittelventil (31) nach einem der vorhergehenden Ansprüche, **dadurch gekennzeichnet,**
a) **dass** das Beschichtungsmittelventil (31) ein Wechselventil ist mit einem Auslass und mehreren Einlässen, und/oder
b) **dass** das drehbare Ventilelement (2) am Beschichtungsmitteleinlass eine Bewegungsrichtung aufweist, die quer zur Strömungsrichtung ausgerichtet ist, um beim Schließen des Beschichtungsmitteleinlasses ein Nachdrücken und ein daraus möglicherweise folgendes Nachtropfen zu vermeiden.

13. Beschichtungsmittelventil (31) nach einem der vorhergehenden Ansprüche, **dadurch gekennzeichnet,**
a) **dass** eine Materialzirkulation des Beschichtungsmittels durch das Beschichtungsmittelventil (31) erfolgt, und/oder
b) **dass** das Beschichtungsmittelventil (31) die Materialzirkulation in Abhängigkeit von der Drehstellung des drehbaren Ventilelements (2) wahlweise freigibt oder sperrt.

14. Applikationsgerät (30), insbesondere Zerstäuber (30), zur Applikation eines Beschichtungsmittels, mit einem Beschichtungsmittelventil (31) nach einem der vorhergehenden Ansprüche.

15. Applikationsgerät (30) nach Anspruch 14,
**dadurch gekennzeichnet,**
a) **dass** das Beschichtungsmittelventil (31) ein Hauptventil ist, so dass sich stromabwärts hinter dem Beschichtungsmittelventil (31) kein weiteres Ventil befindet, und/oder
b) **dass** das Applikationsgerät (30) kein zusätzliches Kurzspülventil aufweist, um Leitungsvolumen stromabwärts hinter dem Beschichtungsmittelventil (31) zu spülen.

## Claims

1. A coating agent valve (31) for controlling a stream of a coating agent in an application device, in particular in an atomiser, having
a) a rotatably movable valve element (2) which controls the stream of coating agent dependent on its rotational position,
b) a first coating agent inlet (F1) for supplying a first coating agent,
c) a second coating agent inlet (F2) for supplying a second coating agent, and
d) a coating agent outlet (8) for delivering either the first coating agent or the second coating agent, the rotatable valve element (2) connecting the coating agent outlet (8) either to the first coating agent inlet (F1) or to the second coating agent inlet (F2) dependent on its rotary position,
**characterised by**
e) a first return means (RF1) for returning the first coating agent, the rotatable valve element (2) either blocking off the first return means (RF1) or connecting it to the first coating agent inlet (F1) dependent on its rotary position, and
f) a second return means (RF2) for returning the second coating agent, the rotatable valve element (2) either blocking off the second return means (RF2) or connecting it to the second coating agent inlet (F2) dependent on its rotary position.

2. A coating agent valve (31) according to claim 1, **characterised by**
a) a flushing agent inlet (V) for supplying a flushing agent,
b) the rotatable valve element (2) either blocking off the flushing agent inlet (V) or connecting it to the coating agent outlet (8), and/or
c) the rotatable valve element (2) either blocking off the flushing agent inlet (V) or connecting it to an external flushing duct for externally flushing the bell cup (12).

3. A coating agent valve (31) according to one of the preceding claims, **characterised by**
a) a first rotary position (Fig. 1A - 1C) of the rotatable valve element (2), in which the rotatable valve element (2)
a1) connects the first coating agent inlet (F1) to the coating agent outlet (8) in order to apply the first coating agent,
a2) blocks off the first return means (RF1),
a3) connects the second coating agent inlet (F2) to the second return means (RF2) in order to reload the second coating agent, and
a4) blocks off the flushing agent inlet (V),
b) a second rotary position (Fig. 2A - 2C) of the rotatable valve element (2), in which the rotatable valve element (2)
b1) blocks off the first coating agent inlet (F1),
b2) blocks off the first return means (RF1),
b3) connects the second coating agent inlet (F2) to the second return means (RF2) in order to reload the second coating agent, and
b4) blocks off the flushing agent inlet (V),
c) a third rotary position (Fig. 3A - 3C) of the rotatable valve element (2), in which the rotatable valve element (2)
c1) blocks off the first coating agent inlet (F1),
c2) blocks off the first return means (RF1),
c3) blocks off the second coating agent inlet (F2),
c4) blocks off the second return means (RF2), and
c5) connects the flushing agent inlet (V) to the coating agent outlet (8) and/or to the external flushing duct,
d) a fourth rotary position (Fig. 4A - 4C) of the rotatable valve element (2), in which the rotatable valve element (2)
d1) connects the first coating agent inlet (F1) to the first return means (RF1),
d2) blocks off the second coating agent inlet (F2),
d3) blocks off the second return means (RF2), and
d4) blocks off the flushing agent inlet (V),
e) a fifth rotary position (Fig. 5A - 5C) of the rotatable valve element (2), in which the rotatable valve element (2)
e1) connects the first coating agent inlet (F1) to the first return means (RF1),
e2) connects the second coating agent inlet (F2) to the coating agent outlet (8),
e3) blocks off the second return means (RF2), and
e4) blocks off the flushing agent inlet (V).

4. A coating agent valve (31) according to one of the preceding claims, **characterised in that**
a) the rotatable valve element (2) is shaped substantially cylindrically and is arranged rotatably in a hollow-cylindrical paint tube (1), and
b) the first coating agent inlet (F1) feeds a first coating agent duct (3) which runs in the wall of the paint tube (1),
c) the first return means (RF1) is fed from a second coating agent duct (5) which runs in the wall of the paint tube (1),
d) the second coating agent inlet (F2) feeds a third coating agent duct (4) which runs in the wall of the paint tube (1),
e) the second return means (RF2) is fed from a fourth coating agent duct (6) which runs in the wall of the paint tube (1),
f) the flushing agent inlet (V) feeds a fifth coating agent duct (9) which runs in the wall of the paint tube (1), and/or
g) the coating agent outlet (8) is arranged in the rotatable valve element (2), in particular centrally.

5. A coating agent valve (31) according to Claim 4, **characterised in that**
a) the first coating agent duct (3) which starts from the first coating agent inlet (F1) opens into the inner wall of the paint tube (1) at the same angle at circumference as the second coating agent duct (5) [which starts] from the first return means (RF1),
b) the first coating agent duct (3) which starts from the first coating agent inlet (F1) opens into the inner wall of the paint tube (1) axially offset to the second coating agent duct (5) which starts from the first return means (RF1),
c) the third coating agent duct (4) which starts from the second coating agent inlet (F2) opens into the inner wall of the paint tube (1) at the same angle at circumference as the fourth coating agent duct (6) which starts from the second return means (RF2),
d) the third coating agent duct (4) which starts from the second coating agent inlet (F2) opens into the inner wall of the paint tube (1) axially offset to the fourth coating agent duct (6) which starts from the second return means (RF2), and
e) the first coating agent duct (3) and the second coating agent duct (5) on one hand and the third coating agent duct (4) and the fourth coating agent duct (6) on the other hand open into the inner wall of the paint tube (1) at different angles at circumference.

6. A coating agent valve (31) according to Claim 5, **characterised in that**
a) a branch bore (7) runs in the rotatable valve element (2), which bore starts from the outer casing surface of the valve element (2) and opens into the coating agent outlet (8), and
b) **in that** the branch bore (7) in the rotatable valve element (2) can be fed with the first coating agent from the first coating agent duct (3) or with the second coating agent from the third coating agent duct (4) dependent on the rotary position of the valve element (2).

7. A coating agent valve (31) according to Claim 5 or 6, **characterised in that**
a) the rotatable valve element (2) has in its outer casing surface a first recess (10) which extends in the axial direction,
b) the first recess (10) connects the first coating agent duct (3) to the second coating agent duct (5) dependent on the rotary position,
c) the rotatable valve element (2) has in its outer casing surface a second recess (11) which extends in the axial direction,
d) the second recess (11) connects the third coating agent duct (4) to the fourth coating agent duct (6) dependent on the rotary position.

8. A coating agent valve (31) according to one of the preceding claims, **characterised in that**
a) a flushing agent outlet (12) is arranged in the rotatable valve element (2) for delivering flushing agent for external flushing of a bell cup (33) of a rotary atomiser (30), and/or
b) the flushing agent outlet (12) is connected to the branch bore (7) in the rotatable valve element (2), and/or
c) the flushing agent outlet (12) is connected to an external flushing duct of a rotary atomiser (30) which guides the flushing agent onto the outer casing surface of the bell cup (33), and/or
d) a valve drive is provided for turning the valve element (2), in particular in the form of an electric, pneumatic or hydraulic valve drive.

9. A coating agent valve (31) according to Claim 8, **characterised in that**
a) the valve drive has a drive chamber (24) which surrounds the rotation spindle of the rotatable valve element (2) in annular manner at least in part, and
b) the rotatable valve element (2) is connected mechanically to a pivoting vane (25) which is pivotable in the drive chamber (24), so that pivoting of the pivoting vane (25) leads to a corresponding rotation of the valve element (2), and
c) a first drive air inlet (23) opens into the drive chamber (24) in order to turn the pivoting vane (25) and hence also the valve element (2) in a first direction of rotation, and
d) a second drive air inlet (23) opens into the drive chamber (24) in order to turn the pivoting vane (25) and hence also the valve element (2) in a second direction of rotation, the second direction of rotation being opposed to the first direction of rotation.

10. A coating agent valve (31) according to Claim 9, **characterised in that**
a) a plurality of angle-of-rotation stops (20-22) which limit the pivot angle of the pivoting vane (25) in each case at various angular positions are provided, and/or
b) the angle-of-rotation stops (20-22) can be activated and deactivated in each case, with the angle-of-rotation stops (20-22) in an activated position limiting the pivot angle of the pivoting vane (25), whereas the angle-of-rotation stops (20-22) in a deactivated position do not limit the pivot angle of the pivoting vane (25).

11. A coating agent valve (31) according to Claim 10, **characterised in that**
a) the angle-of-rotation stops (20-22) in each case have a slider,
b) the slider in the activated position is pushed into the drive chamber (24) and blocks the pivoting vane (25), and
c) the slider in the deactivated position is drawn out of the drive chamber (24) and does not block the pivoting vane (25).

12. A coating agent valve (31) according to one of the preceding claims, **characterised in that**
a) the coating agent valve (31) is a shuttle valve with an outlet and a plurality of inlets, and/or
b) the rotatable valve element (2) at the coating agent inlet has a direction of movement which is oriented transversely to the direction of flow in order to avoid subsequent pressure application and possibly resultant dripping upon closing the coating agent inlet.

13. A coating agent valve (31) according to one of the preceding claims, **characterised in that**
a) a circulation of material of the coating agent through the coating agent valve (31) takes place, and/or
b) the coating agent valve (31) either enables or blocks the circulation of material dependent on the rotary position of the rotatable valve element (2).

14. An application device (30), in particular atomiser (30), for the application of a coating agent, having a coating agent valve (31) according to one of the preceding claims.

15. An application device (30) according to Claim 14, **characterised in that**
a) the coating agent valve (31) is a main valve, so that no further valve is located downstream after the coating agent valve (31), and/or
b) the application device (30) does not have an additional short flushing valve in order to flush line volumes downstream after the coating agent valve (31).

## Revendications

1. Soupape de produit de revêtement (31) pour le contrôle d'un flux de produit de revêtement d'un produit de revêtement dans un appareil d'application, plus particulièrement dans un pulvérisateur, avec
a) un élément de soupape mobile rotatif (2) qui contrôle le flux de produit de revêtement en fonction de sa position de rotation,
b) une première entrée de produit de revêtement (F1) pour l'introduction d'un premier produit de revêtement,
c) une deuxième entrée de produit de revêtement (F2) pour l'introduction d'un deuxième produit de revêtement et
d) une sortie de produit de revêtement (8) pour la distribution soit du premier produit de revêtement soit du deuxième produit de revêtement, dans laquelle l'élément de soupape rotatif (2) relie la sortie de produit de revêtement (8), en fonction de sa position de rotation, soit avec la première entrée de produit de revêtement (F1) soit avec la deuxième entrée de produit de revêtement (F2),
**caractérisée par**
e) une première conduite de retour (RF1) pour le retour du premier produit de revêtement, dans laquelle l'élément de soupape rotatif (2), en fonction de sa position de rotation, soit obture la première conduite de retour (RF1) soit la relie avec la première entrée de produit de revêtement (F1) et
f) une deuxième conduite de retour (RF2) pour le retour du deuxième produit de revêtement, dans laquelle l'élément de soupape rotatif (2), en fonction de sa position de rotation, soit obture la deuxième conduite de retour (RF2) soit la relie avec la deuxième entrée de produit de revêtement (F2).

2. Soupape de produit de revêtement (31) selon la revendication 1, **caractérisée par**
a) une entrée de produit de rinçage (V) pour l'introduction d'un produit de rinçage,
b) dans laquelle l'élément de soupape rotatif (2) soit obture l'entrée de produit de rinçage (V) soit la relie avec la sortie de produit de revêtement (8) et/ou
c) dans laquelle l'élément de soupape rotatif (2) soit obture l'entrée de produit de rinçage (V) soit la relie avec un canal de rinçage externe pour le rinçage externe d'un plateau à cloche (12).

3. Soupape de produit de revêtement (31) selon l'une des revendications précédentes, **caractérisée par**
a) une première position de rotation (Fig. 1A - 1C) de l'élément de soupape rotatif (2), dans laquelle l'élément de soupape rotatif (2)
a1) relie la première entrée de produit de revêtement (F1) avec la sortie de produit de revêtement (8) afin d'appliquer le premier produit de revêtement,
a2) obture la première conduite de retour (RF1),
a3) relie la deuxième entrée de produit de revêtement (F2) avec la deuxième conduite de retour (RF2) afin de comprimer le deuxième produit de revêtement et
a4) obture l'entrée l'entrée de produit de rinçage (V),
b) une deuxième position de rotation (fig. 2A - 2C) de l'élément de soupape rotatif (2), dans laquelle l'élément de soupape rotatif (2)
b1) obture la première entrée de produit de revêtement (F1),
b2) obture la première conduite de retour (RF1),
b3) relie la deuxième entrée de produit de revêtement (F2) avec la deuxième conduite de retour (RF2) afin de comprimer le deuxième produit de revêtement et
b4) obture l'entrée de produit de rinçage (V)
c) une troisième position de rotation (Fig. 3A - 3C) de l'élément de soupape rotatif (2), dans laquelle l'élément de soupape rotatif (2)
c1) obture la première entrée de produit de revêtement (F1),
c2) obture la première conduite de retour (RF1),
c3) obture la deuxième entrée de produit de revêtement (F2),
c4) obture la deuxième conduite de retour (RF2) et
c5) relie l'entrée de produit de rinçage (V) avec la sortie de produit de revêtement (8) et/ou avec le canal de rinçage externe,
d) une quatrième position de rotation (Fig. 4A - 4C) de l'élément de soupape rotatif (2), dans laquelle l'élément de soupape rotatif (2)
d1) relie la première entrée de produit de revêtement (F1) avec la première conduite de retour (RF1),
d2) obture la deuxième entrée de produit de revêtement (F2),
d3) obture la deuxième conduite de retour (RF2) et
d4) obture l'entrée de produit de rinçage (V),
e) une cinquième position de rotation (Fig. 5A - 5C) de l'élément de soupape rotatif (2), dans laquelle l'élément de soupape rotatif (2)
e1) relie la première entrée de produit de revêtement (F1) avec la première conduite de retour (RF1),
e2) relie la deuxième entrée de produit de revêtement (F2) avec la sortie de produit de revêtement (8),
e3) obture la deuxième conduite de retour (RF2) et
e4) obture l'entrée de produit de rinçage (V).

4. Soupape de produit de revêtement (31) selon l'une des revendications précédentes, **caractérisée en ce que**
a) l'élément de soupape rotatif (2) présente une forme globalement cylindrique et est disposé de manière rotative dans un tube de couleur cylindrique creux (1) et
b) la première entrée de produit de revêtement (F1) alimente un premier canal de produit de revêtement (3) qui s'étend dans la paroi du tube de couleur (1),
c) la première conduite de retour (RF1) est alimentée à partir d'un deuxième canal de produit de revêtement (5) qui s'étend dans la paroi du tube de couleur (1),
d) la deuxième entrée de produit de revêtement (F2) alimente un troisième canal de produit de revêtement (4) qui s'étend dans la paroi du tube de couleur (1),
e) la deuxième conduite de retour (RF2) est alimentée à partir d'un quatrième canal de produit de revêtement (6) qui s'étend dans la paroi du tube de couleur (1),
f) l'entrée de produit de rinçage (V) alimente un cinquième canal de produit de revêtement (9) qui s'étend dans la paroi du tube de couleur (1) et/ou
g) la sortie de produit de revêtement (8) est disposée dans l'élément de soupape rotatif (2), plus particulièrement au centre.

5. Soupape de produit de revêtement (31) selon la revendication 4, **caractérisée en ce que**
a) le premier canal de produit de revêtement (3) sortant de la première entrée de produit de revêtement (F1) débouche dans la paroi interne du tube de couleur (1) avec le même angle circonférentiel que le deuxième canal de produit de revêtement (5) sortant de la première conduite de retour (RF1),
b) le premier canal de produit de revêtement (3) sortant de la première entrée de produit de revêtement (F1) débouche dans la paroi interne du tube de couleur (1) de manière décalée axialement par rapport au deuxième canal de produit de revêtement (5) sortant de la première conduite de retour (RF1),
c) le troisième canal de produit de revêtement (4) sortant de la deuxième entrée de produit de revêtement (F2) débouche dans la paroi interne du tube de couleur (1) avec le même angle circonférentiel que le quatrième canal de produit de revêtement (6) sortant de la deuxième conduite de retour (RF2),
d) le troisième canal de produit de revêtement (4) sortant de la deuxième entrée de produit de revêtement (F2) débouche dans la paroi interne du tube de couleur (1) de manière décalée axialement par rapport au quatrième canal de produit de revêtement (6) sortant de la deuxième conduite de retour (RF2) et
e) le premier canal de produit de revêtement (3) et le deuxième canal de produit de revêtement (5) d'une part et le troisième canal de produit de revêtement (4) et le quatrième canal de produit de revêtement (6) d'autre part débouchent dans la paroi interne du tube de couleur (1) avec des angles circonférentiels différents.

6. Soupape de produit de revêtement (31) selon la revendication 5, **caractérisée en ce que**
a) dans l'élément de soupape rotatif (2) s'étend un perçage (7) qui sort de la surface d'enveloppe externe de l'élément de soupape (2) et débouche dans la sortie de produit de revêtement (8) et
b) le perçage (7) dans l'élément de soupape rotatif (2) peut être alimenté, en fonction de la position de rotation de l'élément de soupape (2), à partir du premier canal de produit de revêtement (3) avec le premier produit de revêtement ou à partir du troisième canal de produit de revêtement (4) avec le deuxième produit de revêtement.

7. Soupape de produit de revêtement (31) selon la revendication 5 ou 6, **caractérisée en ce que**
a) l'élément de soupape rotatif (2) comprend, dans sa surface d'enveloppe externe, un premier évidement (10) qui s'étend dans la direction axiale,
b) le premier évidement (10) relie, en fonction de la position de rotation, le premier canal de produit de revêtement (3) avec le deuxième canal de produit de revêtement (5),
c) l'élément de soupape rotatif (2) comprend, dans sa surface d'enveloppe externe, un deuxième évidement (11) qui s'étend dans la direction axiale,
d) le deuxième évidement (11) relie, en fonction de la position de rotation, le troisième canal de produit de revêtement (4) avec le quatrième canal de produit de revêtement (6).

8. Soupape de produit de revêtement (31) selon l'une des revendications précédentes, **caractérisée en ce que**
a) dans l'élément de soupape rotatif (2), est disposée une sortie de produit de rinçage (12) pour la distribution du produit de rinçage pour un rinçage externe d'un plateau à cloche (33) d'un pulvérisateur rotatif (30) et/ou
b) la sortie de produit de rinçage (12) est reliée avec le perçage (7) dans l'élément de soupape rotatif (2) et/ou
c) la sortie de produit de rinçage (12) est reliée avec un canal de rinçage externe d'un pulvérisateur rotatif (30), qui conduit le produit de rinçage vers la surface d'enveloppe externe du plateau à cloche (33) et/ou
d) un entraînement de soupape est prévu pour la rotation de l'élément de soupape (2), plus particulièrement sous la forme d'un entraînement de soupape électrique, pneumatique ou hydraulique.

9. Soupape de produit de revêtement (31) selon la revendication 8, **caractérisée en ce que**
a) l'entraînement de soupape comprend une chambre d'entraînement (24) qui entoure au moins partiellement de manière annulaire l'axe de rotation de l'élément de soupape rotatif (2) et
b) l'élément de soupape rotatif (2) est relié mécaniquement avec un panneau pivotant (25) qui peut pivoter dans la chambre d'entraînement (24), de façon à ce qu'un pivotement du panneau pivotant (25) conduise à une rotation correspondante de l'élément de soupape (2) et
c) une première entrée d'air d'entraînement (23) débouche dans la chambre d'entraînement (24), afin de faire tourner le panneau pivotant (25) et donc également l'élément de soupape (2) dans un premier sens de rotation et
d) une deuxième entrée d'air d'entraînement (23) débouche dans la chambre d'entraînement (24), afin de faire tourner le panneau pivotant (25) et donc également l'élément de soupape (2) dans un deuxième sens de rotation, dans laquelle le deuxième sens de rotation est opposée au premier sens de rotation.

10. Soupape de produit de revêtement (31) selon la revendication 9, **caractérisée en ce que**
a) plusieurs butées d'angles de rotation (20 - 22) sont prévues, qui limitent l'angle de pivotement du panneau pivotant (25) à différentes positions angulaires et/ou
b) les butées d'angles de rotation (20 - 22) sont respectivement activables et désactivables, dans lesquelles les butées d'angles de rotation (20 - 22) limitent, dans une position activée, l'angle de pivotement du panneau pivotant (25), en revanche les butées d'angles de rotation (20 - 22) ne limitent pas, dans une position désactivée, l'angle de pivotement du panneau pivotant (25).

11. Soupape de produit de revêtement (31) selon la revendication 10, **caractérisée en ce que**
a) les butées d'angles de rotation (20 - 22) comprennent chacune un curseur,
b) le curseur, dans la position activée, est poussé à l'intérieur de la chambre d'entraînement (24) et bloque le panneau pivotant (25) et
c) le curseur, dans la position désactivée, est tiré hors de la chambre d'entraînement (24) et ne bloque pas le panneau pivotant (25).

12. Soupape de produit de revêtement (31) selon l'une des revendications précédentes, **caractérisée en ce que**
a) la soupape de produit de revêtement (31) est une soupape multivoie avec une sortie et plusieurs entrées et/ou
b) l'élément de soupape rotatif (2) présente, au niveau de l'entrée de produit de revêtement, une direction de déplacement qui est orientée transversalement par rapport à la direction de l'écoulement, afin d'éviter, lors de la fermeture de l'entrée de produit de revêtement, le maintien de la pression et un égouttage qui pourrait éventuellement en résulter.

13. Soupape de produit de revêtement (31) selon l'une des revendications précédentes, **caractérisée en ce que**
a) une remise en circulation du produit de revêtement a lieu grâce à la soupape de produit de revêtement (31) et/ou
b) la soupape de produit de revêtement (31) libère ou bloque la remise en circulation en fonction de la position de rotation de l'élément de soupape rotatif (2).

14. Appareil d'application (30), plus particulièrement pulvérisateur (30), pour l'application d'un produit de revêtement, avec une soupape de produit de revêtement (31) selon l'une des revendications précédentes.

15. Appareil d'application (30) selon la revendication 14, **caractérisé en ce que**
a) la soupape de produit de revêtement (31) est une soupape principale, de façon à ce que, en aval de la soupape de produit de revêtement (31) ne se trouve aucune autre soupape et/ou
b) l'appareil d'application (30) ne comprend aucune soupape de rinçage court afin de rincer les volumes des conduites en aval de la soupape de produit de revêtement (31).
